# EUROPEAN PATENT SPECIFICATION

(11) **EP 0 413 975 B1**
(45) Date of publication and mention of the grant of the patent: **26.04.1995**
(21) Application number: 90114058.2
(22) Date of filing: 23.07.1990
(51) Int. Cl.: B29C 35/12, H05B 6/54

(54) **High dielectric constant material to shape electric fields for heating plastics**
Material mit einer hohen dielektrischen Konstante, das elektrischer Felder zum Erhitzen von Kunststoffen erzeugt
Matière à constante diélectrique élevée pouvant produire des champs électriques pour chauffer les matières plastiques

(30) Priority: 21.08.1989 US 396196
(43) Date of publication of application: 27.02.1991
(73) Proprietor: GENERAL ELECTRIC COMPANY, Schenectady New York 12305 (US)
(72) Inventor: Minnich, Stephen H., Schenectady, New York 12309 (US)
(74) Representative: Pratt, Richard Wilson

(56) References cited:
- EP-A- 0 228 615
- DE-A- 2 639 169
- DE-A- 3 824 347
- DE-C- 955 626
- US-A- 2 592 691
- US-A- 2 824 200
- US-A- 3 716 689
- US-A- 4 269 581

## Description

### BACKGROUND OF THE INVENTION

The present invention relates to an apparatus for heating a deformable plastic workpiece, comprising a radio frequency generator; first and second electrodes electrically connected to the generator and arranged relative to one another so as to define a space therebetween for receiving the workpiece and to produce a radio frequency electric field in the space; and first and second dielectric members, respectively extending completely across and being disposed between the first and second electrodes.

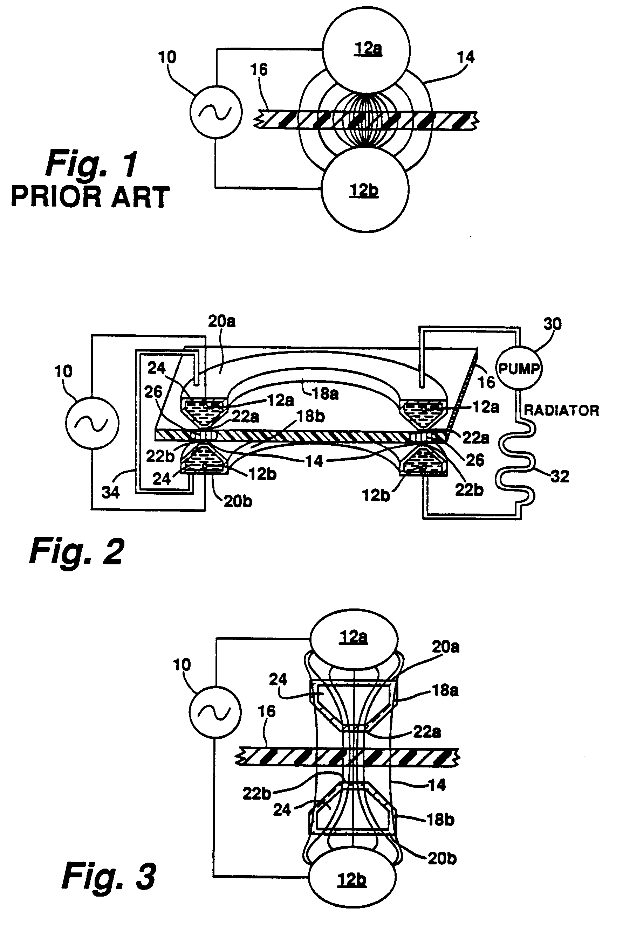

It is known to use RF (radio frequency) fields to soften plastic sheet materials, which materials are then formed by a mold into a desired shape. Figure 1 shows a typical prior art apparatus for doing this. In particular, an RF generator 10, which typically provides a 10 to 100 MHz signal, is coupled to a pair of circular electrodes 12a and 12b. In turn, an RF field is created between circular (or other shape) cross-section electrodes 12 as indicated by field lines 14, which field passes through a sheet of plastic workpiece material 16. Sheet 16 typically has a thickness between about 1/8 to 1/4 inch (0.3175 to 0.635 cm). Such an apparatus heats most of sheet 16, although as can be seen by the spacing of field lines 14, not in a uniform manner. Thereafter sheet 14 is placed in male and female molds and pressed into the desired shape

Frequently it is necessary to deform only a portion of the material in order to achieve the desired shape. Thus heating of the entire sheet is wasteful of the heating energy. Further, when the entire sheet is heated, the entire sheet must be supported since it is soft. Also incomplete female mold filling can result due to cooling of the plastic, thereby making the molding of complex shapes difficult. A technique for localized heating that avoids some of these problems is to blow hot air just at the portions to be heated. However, the heat must then conduct through the plastic thickness before molding, which increases cycle time.

In contradistinction, in order to make some products, it is necessary to use a highly uniform RF field to achieve uniform softening. The typical prior art RF heating device of Figure 1 undesirably concentrates the RF field at the portion of sheet 16 that is directly between electrodes 12.

It is therefore an object of the present invention to have an apparatus and method for RF heating of a plastic sheet wherein the RF field can be uniformly applied or locally applied, as desired, can make molding of complex shapes practical, and has a relatively short cycle time.

The present invention provides an apparatus for heating a deformable plastic workpiece, said apparatus comprising a radio frequency generator; first and second electrodes electrically connected to the generator and arranged relative to one another so as to define a space therebetween for receiving the workpiece and to produce a radio frequency electric field in said space; and first and second dielectric members, respectively extending completely across said first and second electrodes and being disposed between said electrodes and said space characterized in that said dielectric members and electrodes are shaped so as to shape said field and cause localized heating of the workpiece.

A method in accordance with the invention for heating a plastic material comprises generating a radio frequency field; and shaping said field proximate the material using at least two high dielectric constant members.

Preferably the dielectric members each have a relative dielectric constant of at least 10.

### BRIEF DESCRIPTION OF THE DRAWING

Figure 1 is a schematic cross-sectional view of a typical prior art RF heating apparatus;
Figure 2 is a partly cross-sectional and partly isometric view of a first embodiment of the invention for localized heating;
Figure 3 is a cross-sectional view of a second embodiment of the invention for localized heating;
Figure 4 is a cross-sectional view of a third embodiment of the invention with interior electrodes;
Figure 5 is a cross-sectional view of a fourth embodiment of the invention for uniform heating; and
Figure 6 is a cross-sectional view of a sixth embodiment of the invention for uniform heating.

In the drawing corresponding elements have been given corresponding reference numerials.

### DETAILED DESCRIPTION

In Figure 2 is shown field shaping means comprising containers 18a and 18b, such as glass or an RF insensitive plastic. Containers 18 have a full circular shape when seen in a top or bottom view and have wide ends 20a and 20b adjacent interior annular electrodes 12a and 12b, respectively, and narrow ends 22a and 22b adjacent workpiece material 16. Workpiece 16 can be a plastic such as polytetrafluoroethylene sold under the trademark "Teflon" by E. I. Dupont Co., Inc. Wilmington, Delaware, the poly-carbonate thermoplastic sold under the trademark "Lexan", the mixture of high impact polystrene and polypheylene sold under the trademark "Noryl", both by General Electric (GE) Co. Pittsfield, Mass., a polyolefin, etc. By positioning electrodes 12 inside containers 18, electrical field stress thereat is reduced.

Within containers 18 is a high dielectric constant material (HDCM) 24, such as a liquid, e.g., an alcohol, ethylene glycol, etc. In particular, substantially pure water (εᵣ = 80) is a good choice. A cooling means, such as pump 30 and radiator 32, is present that takes a fluid cooling medimum, e.g., water, oil, a gas etc., out of one of containers 18 and returns the medium to the remaining container 18 at one side thereof. The other sides of containers 18 are connected together by pipe 34 so that the medium flows between containers 18a and 18b.

HDCM 24 can also be a solid, e.g., calcium titanate, magnesium titanate, strontium titanate, aluminum oxide, titanium dioxide, glass, etc. Due to the low dielectric constant of glass (εᵣ = 4 to 8), there will be less field concentration. However, since the dielectric constant of glass depends upon its composition, it might be possible to design a composition with a high dielectric constant. In particular, barium titanate is a good choice (εᵣ = 1143) In general, the higher the dielectric constant and the lower the dielectric loss, the better the material is for use as a HDCM. When using a solid HDCM 24, it can be possible that the losses therein can be low enough so that pump 30, radiator 32, and pipe 34 can be eliminated. Otherwise internal channels or passages can be disposed in HDCM 24 for passage of a cooling medium.

The effect of HDCM 24 is to concentrate the field lines 14 at a annular localized area 26 of workpiece 16 to provide localized heating and softening. Subsequently, workpiece 16 is placed in male and female molds and area 26 is stretched to make a desired object, e.g., a waste receptacle.

In the second embodiment of Figure 3, electrodes 12 are shown as being elliptical in cross-section to provide a uniform field to wide ends 20 and disposed exterior of the containers 18. However, there may be an excessive field concentration at the sides of electrodes 12 where the radius of curvature is highest. If so, then circular electrodes as shown in Figure 1 can be used.

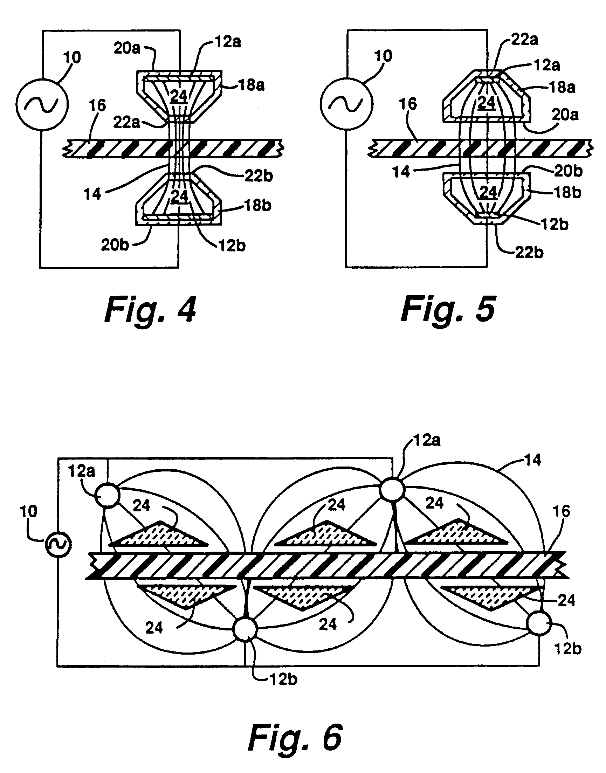

Figure 4 shows that electrodes 12a and 12b comprise conductive plates respectively disposed in containers 18a and 18b. This can be done even if HDCM 24 is water since pure water is a good insulator. Also, because of the high dielectric constant, field stress concentrations are lowered. If desired, plates 12 can have rounded corners to reduce electric field concentration. Further, contoured electrodes, e.g., circular or elliptical as shown in Figs. 1 and 3 can be used inside containers 18 of Fig. 4.

Figure 5 shows that containers 18 have their narrow ends 22a and 22b respectively disposed adjacent electrodes 12a and 12b, while their wide ends 20a and 20b are adjacent material 16. This achieves a nearly uniform field 14 for uniform heating of material 16. If desired, material 16 can be moving to obtain a still more nearly uniform field.

Figure 6 shows typical prior art "crossed-field" electrodes 12 comprising conductive rods extending parallel to workpiece 16. Such an arrangement has a lower capacitance compared to parallel plates. Although only four electrodes 12 are shown, in an actual embodiment more would normally be used. In the prior art, non-uniformities in the field produced by such electrodes are tolerated since workpiece 16 is a moving web, and thus all portions of workpiece 18 eventually are subjected to the same average field. However, if it is desired to heat a single stationary sheet this effect will not occur. The present invention makes the field more uniform by using HDCM field smoothing elements 24. In Fig. 6, HDCM elements 24 are shown as having a triangular cross-section. In practice they might have a more complex shape. The shape and location of elements 24 are determined by an analysis of the electric field produced by electrodes 12 in the presence of elements 24. The shape of elements 24 is iterated until the desired field distribution is obtained.

It will be appreciated that since the dielectric constant of HDCM 24 is higher than that of workpiece 16, the electric field is lower there than anywhere else, including workpiece 16. Thus, higher loss materials, e.g., loss tangents between about 0.001 to 0.01, can be used for HDCM 24 as compared to materials typically used in capacitors where the electric field is strong everywhere. Further, the present invention is not limited to symmetrical configurations as described above. Other configurations are possible where a single HDCM member 24 is disposed on one side of workpiece 16. In this case it may be desirable to have the electrode 12 disposed on the other side of workpiece 16 configured as a flat plate to provide an electrostatic image.

## Claims

1. An apparatus for heating a deformable plastic workpiece, said apparatus comprising :
a radio frequency generator (10);
first and second electrodes (12a,12b) electrically connected to the generator and arranged relative to one another so as to define a space therebetween for receiving the workpiece (16) and to produce a radio frequency electric field in said space; and
first and second dielectric members (24), respectively extending completely across said first and second electrodes (12a,12b), and being disposed between said electrodes and said space characterized in that said dielectric members (24) and electrodes (12a,12b) are shaped so as to shape said field and cause localized heating of the workpiece (16).

2. The apparatus of Claim 1 wherein each of said dielectric members (24) has a narrow side (22a,22b) adjacent to said workpiece retaining space and a wide side adjacent to its corresponding electrode (12a,12b).

3. The apparatus of Claim 1 wherein each of said dielectric members (24) has a narrow side adjacent to its corresponding electrode (12a,12b) and a wide side adjacent to said workpiece retaining space.

4. The apparatus of Claim 1 wherein each of said first and second electrodes (12a,12b) has a circular cross-section.

5. The apparatus of Claim 1 wherein each of said first and second electrodes (12a,12b) has an elliptical cross-section.

6. The apparatus of Claim 1 wherein each of said first and second electrodes (12a,12b) is a plate.

7. The apparatus of Claim 1 wherein each of said first and second dielectric members (24) is a solid material.

8. The apparatus of Claim 7 wherein said solid material is a titanate.

9. The apparatus of Claim 8 wherein said titanate is barium titanate.

10. The apparatus of Claim 1 wherein said radio frequency generator (10) has a frequency between 10 to 100 MHz.

11. The apparatus of Claim 1 wherein said first and second dielectric members (24) each have a relative dielectric constant of at least 10.

12. The apparatus of Claim 1 wherein each of said first and second dielectric members (24) is a liquid material and said first dielectric member is disposed within a first container (18a) and second dielectric member is disposed within a second container (18b).

13. The apparatus of Claim 11 wherein said liquid material is substantially pure water.

14. The apparatus of Claim 12 further comprising a pump (30) connected to one of said containers, a conduit (34) interconnecting said containers, and a radiator (32) connected to said pump and the other one of said containers.

15. The apparatus of Claim 12 wherein each of said first and second electrodes (12a,12b) is disposed internally of said first and second containers (18a,18b), respectively.

16. The apparatus of Claim 12 wherein each of said first and second electrodes (12a,12b) is disposed externally of said first and second containers (18a,18b), respectively.

17. A method of heating a deformable workpiece of plastic material, said method comprising :
disposing the workpiece to be heated (16) between and spaced from a pair of electrodes (12a,12b) adapted to provide a radio frequency field;
generating the radio frequency field; and
shaping said field proximate to the material using a dielectric member (24) having a relative dielectric constant of at least ten to provide a uniform field for heating a localized area of said workpiece, said member extending completely across at least one of said electrodes (12a,12b) without contacting said material.

18. The method of Claim 17 wherein said shaping step comprises uniformly dispersing said field on the material.

## Patentansprüche

1. Ein Gerät zum Erhitzen eines deformierbaren Kunststoffwerkstücks, wobei das Gerät folgendes umfaßt:
einen Hochfrequenzgenerator (10);
erste und zweite Elektroden (12a,12b), die mit dem Generator elektrisch verbunden sind und relativ zueinander so angeordnet sind, daß sie zwischen sich einen Raum bilden zum Aufnehmen des Werkstücks (16) und um ein elektrisches Hochfrequenzfeld in diesem Raum zu erzeugen, und
erste und zweite dielektrische Glieder (24),
die sich jeweils vollständig über diese erste und die zweite Elektrode (12a,12b) erstrecken und zwischen diesen Elektroden und diesem Raum angeordnet sind, dadurch gekennzeichnet, daß die dielektrischen Glieder (24) und die Elektrode (12a,12b) so geformt sind, daß sie das Feld formen und lokalisierte Erhitzung des Werkstücks (16) bewirken.

2. Das Gerät nach Anspruch 1, bei dem jedes der dielektrischen Glieder (24) eine schmale Seite (22a,22b) angrenzend an an den das Werkstück enthaltenden Raum und eine breite Seite angrenzend an seine entsprechende Elektrode (12a,12b) aufweist.

3. Das Gerät nach Anspruch 1, bei dem jedes der dielektrischen Glieder (24) eine schmale Seite angrenzend an seine entsprechende Elektrode (12a,12b) und eine breite Seite angrenzend an den das Werkstück enthaltenden Raum aufweist.

4. Das Gerät nach Anspruch 1, bei dem jede der ersten und zweiten Elektroden (12a,12b) einen kreisförmigen Querschnitt aufweist.

5. Das Gerät nach Anspruch 1, bei dem jede der ersten und zweiten Elektroden (12a,12b) einen elliptischen Querschnitt aufweist.

6. Das Gerät nach Anspruch 1, bei dem jede der ersten und zweiten Elektroden (12a,12b) eine Platte ist.

7. Das Gerät nach Anspruch 1, bei dem jedes der ersten und zweiten dielektrischen Glieder (24) ein Feststoffmaterial ist.

8. Das Gerät nach Anspruch 7, bei dem das Feststoffmaterial ein Titanat ist.

9. Das Gerät nach Anspruch 8, bei dem das Titanat Bariumtitanat ist.

10. Das Gerät nach Anspruch 1, bei dem der Hochfrequenzgenerator (10) eine Frequenz zwischen 10 und 100 MHz hat.

11. Das Gerät nach Anspruch 1, bei dem das erste und das zweite dielektrische Glied (24) jeweils eine relative Dielektrizitätskonstante von wenigstens 10 aufweist.

12. Das Gerät nach Anspruch 1, bei dem jedes der ersten und zweiten dielektrischen Glieder (24) ein flüssiges Material ist und das erste dielektrische Glied innerhalb eines ersten Behälters (18a) angeordnet ist und das zweite dielektrische Glied innerhalb eines zweiten Behälters (18b) angeordnet ist.

13. Das Gerät nach Anspruch 11, bei dem das flüssige Material im wesentlichen reines Wasser ist.

14. Das Gerät nach Anspruch 12, das weiterhin eine Pumpe (30), die mit einem der Behälter verbunden ist, eine Leitung (34), die die Behälter miteinander verbindet, und einen Radiator (32), der mit der Pumpe und dem anderen der Behälter verbunden ist, umfaßt.

15. Das Gerät nach Anspruch 12, bei dem jede der ersten und zweiten Elektroden (12a,12b) innerhalb entsprechend von dem ersten bzw. dem zweiten Behälter (18a,18b) angeordnet ist.

16. Das Gerät nach Anspruch 12, bei dem jede der ersten und zweiten Elektroden (12a,12b) außerhalb entsprechend von dem ersten bzw. dem zweiten Behälter (18a,18b) angeordnet ist.

17. Ein Verfahren zum Erhitzen eines deformierbaren Werkstücks aus Kunststoffmaterial, wobei das Verfahren folgendes umfaßt:
Anordnen des Werkstücks (16), das erhitzt werden soll, zwischen und mit Abstand von einem Paar Elektroden (12a, 12b), die so ausgelegt sind, daß sie ein Hochfrequenzfeld erzeugen;
Erzeugen des Hochfrequenzfeldes und
Formen des Feldes nahe dem Material unter Verwendung eines dielektrischen Gliedes (24) mit einer relativen Dielektrizitätskonstanten von wenigstens 10, um ein gleichförmiges Feld zum Erhitzen eines lokalisierten Bereiches des Werkstücks zu erzeugen, wobei sich das Glied vollständig über wenigstens eine der Elektroden (12a,12b) erstreckt, ohne das Material zu berühren.

18. Das Verfahren nach Anspruch 17, bei dem der Formschritt ein gleichmäßiges Verteilen des Feldes auf dem Material umfaßt.

## Revendications

1. Appareil pour chauffer une pièce déformable en matière plastique, ledit appareil comprenant :
un générateur (10) de haute fréquence;
des première et seconde électrodes (12a, 12b) reliées électriquement au générateur et disposées l'une par rapport à l'autre de manière à définir entre elles un espace pour recevoir la pièce à traiter (16) et à produire un champ électrique de haute fréquence dans ledit espace; et
des premier et second éléments diélectriques (24) s'étendant respectivement de façon complète en travers desdites première et seconde électrodes (12a, 12b) et étant disposés entre lesdites électrodes et ledit espace, caractérisé en ce que lesdits éléments diélectriques (24) et lesdites électrodes (12a, 12b) sont configurés de manière a configurer ledit champ et provoquer un chauffage localisé de la pièce à traiter (16).

2. Appareil selon la revendication 1, dans lequel chacun desdits éléments diélectriques (24) comporte un côté étroit (22a, 22b) adjacent audit espace de retenue de pièce et un côté large adjacent à son électrode correspondante (12a, 12b).

3. Appareil selon la revendication 1, dans lequel chacun desdits éléments diélectriques (24) comporte un côté étroit adjacent à son électrode correspondante (12a, 12b) et un côté large adjacent audit espace de retenue de pièce à traiter.

4. Appareil selon la revendication 1, dans lequel chacune desdites première et seconde électrodes (12a, 12b) a une section droite circulaire.

5. Appareil selon la revendication 1, dans lequel chacune desdites première et seconde électrodes (12a, 12b) a une section droite elliptique.

6. Appareil selon la revendication 1, dans lequel chacune desdites première et seconde électrodes (12a, 12b) est une plaque.

7. Appareil selon la revendication 1, dans lequel chacun desdits premier et second éléments diélectriques (24) est une matière solide.

8. Appareil selon la revendication 7, dans lequel ladite matière solide est un titanate.

9. Appareil selon la revendication 1, dans lequel ledit titanate est du titanate de baryum.

10. Appareil selon la revendication 1, dans lequel ledit générateur (10) de haute fréquence génère une fréquence comprise entre 10 et 100 MHz.

11. Appareil selon la revendication 1, dans lequel lesdits premier et second éléments diélectriques (24) ont chacun une constante diélectrique d'au moins 10.

12. Appareil selon la revendication 1, dans lequel chacun desdits premier et second éléments diélectriques (24) est une matière liquide et ledit premier élément diélectrique est disposé à l'intérieur d'un premier récipient (18a) et le second élément diélectrique est disposé à l'intérieur d'un second récipient (18b).

13. Appareil selon la revendication 11, dans lequel ladite matière liquide est de l'eau pratiquement pure.

14. Appareil selon la revendication 12, comprenant, en outre, une pompe (30) raccorde à l'un desdits récipients, un conduit (34) raccordant entre eux lesdits récipients, et un radiateur (32) raccordé à ladite pompe et à l'autre desdits récipients.

15. Appareil selon la revendication 12, dans lequel chacune desdits première et seconde électrodes (12a, 12b) est disposée à l'intérieur desdits premier et second récipients (18a, 18b), respectivement.

16. Appareil selon la revendication 12, dans lequel chacune desdites première et seconde électrodes (12a, 12b) est disposée à l'extérieur desdits premier et second récipients (18a, 18b), respectivement;

17. Procédé de chauffage d'une pièce déformable en matière plastique, ledit procédé consistant :
à disposer la pièce (16) entre une paire d'électrodes (12a, 12b) et à distance de ces électrodes qui sont adaptées pour créer un champ de haute fréquence;
à générer le champ de haute fréquence; et
à configurer ledit champ à proximité de la matière en utilisant un élément diélectrique (24) présentant une constante diélectrique d'au moins dix pour créer un champ uniforme afin de chauffer une zone localisée de ladite pièce, ledit élément s'étendant de façon complète en travers d'au moins une desdites électrode (12a, 12b) sans être en contact avec ladite matière.

18. Procédé selon la revendication 17, dans lequel ladite étape de configuration comprend une dispersion de façon uniforme dudit champ sur la matière.
